# EUROPÄISCHE PATENTSCHRIFT

(11) **EP 1 160 552 B1**
(45) Veröffentlichungstag und Bekanntmachung des Hinweises auf die Patenterteilung: **22.08.2007**
(21) Anmeldenummer: 01111506.0
(22) Anmeldetag: 11.05.2001
(51) Int. Cl.: G01K 17/06

(54) **Verfahren und Vorrichtung zur Erkennung einer Fensterlüftung**
Method and device for detecting an opened window
Méthode et dispositif pour détecter l'ouverture d'une fenêtre

(30) Priorität: 30.05.2000 DE 10026957
(43) Veröffentlichungstag der Anmeldung: 05.12.2001
(73) Patentinhaber: Techem Energy Services GmbH, 65760 Eschborn (DE)
(72) Erfinder: Ohl, Jochen, Dr., 64823 Gross-Umstadt (DE)
(74) Vertreter: KEIL & SCHAAFHAUSEN Patentanwälte

(56) Entgegenhaltungen:
- DE-A- 4 015 072
- DE-A- 4 424 811
- US-A- 4 002 890
- US-A- 4 773 183

## Beschreibung

Die Erfindung bezieht sich auf ein Verfahren zur Erkennung einer Fensterlüftung in beheizten Räumen durch Erkennung von Veränderungen in der Temperatur oder Strömungsgeschwindigkeit der Umgebungsluft sowie eine dafür geeignete Vorrichtung.

Um wertvolle Heizenergie zu sparen, ist es bei Fensterlüftung angebracht, die Wärmeabgabe der Raumheizflächen zu minimieren. Ein besonders großer Effekt lässt sich dann erzielen, wenn die Raumheizflächen wie üblich in unmittelbarer Nähe der Fenster angeordnet sind. Bei konventionellen Thermostatventilen wird dies durch handbetätigtes Schließen des Thermostatventils erreicht. Bei elektronischen Regeleinrichtungen kann das Schließen der Ventile automatisiert werden, wenn eine entsprechende Fensterlüftungserkennung vorhanden ist.

Bekannt sind Systeme (siehe z.B. DE-A-4 015 072), die den zeitlich fallenden Temperaturverlauf während der Fensterlüftung auswerten. Allerdings werden damit häufig nur unzureichende Ergebnisse erzielt, weil der entsprechende Temperatursensor häufig dem kalten Luftstrom nicht direkt ausgesetzt ist, da der Anbringungsort des Sensors in der Regel nicht frei gewählt werden kann. Außerdem nimmt die Temperatur nicht stetig ab, da es aufgrund der Durchmischung der einfließenden kalten Luft und der warmen Raumluft zu Turbulenzen kommt. Daher kann während der Abkühlungsphase ggf. sogar fälschlicherweise eine steigende Temperatur erkannt werden. Schließlich ist der Temperaturunterschied der Raumlufttemperatur zur Außentemperatur gerade während der langen Übergangszeiten häufig so gering, dass der zeitlich geringe Abfall der Raumtemperatur von dem Temperatursensor nicht mehr richtig interpretiert wird.

Daher ist es Aufgabe der Erfindung, eine sichere und zuverlässige Erkennung einer Fensteröffnung oder dgl. zu ermöglichen.

Diese Aufgabe wird bei einem Verfahren der eingangs genannten Art im Wesentlichen dadurch gelöst, dass die Temperatur und/oder Strömungsgeschwindigkeit über der Zeit gemessen und hieraus ein mittlerer Verlauf der Temperatur und/oder Strömungsgeschwindigkeit ermittelt wird und dass Amplitude und/oder Frequenz der Abweichungen von dem mittleren Verlauf der Temperatur und/oder Strömungsgeschwindigkeit analysiert werden.

Der Erfindung liegt die Erkenntnis zugrunde, dass sich bei der Fensteröffnung zwei Luftströmungen überlagern: Die durch Aufsteigen der am Heizkörper erwärmten Luft und Ansaugen der kühleren Bodenluft entstandene sogenannte Raumluftwalze wird durch eine erzwungene konvektive Strömung der einfließenden kälteren Außenluft überlagert. Dadurch entstehen Verwirbelungen und Turbulenzen, die insbesondere im Nahbereich der Heizraumfläche, d.h. des Heizkörpers, ausgeprägt sind. Warme und kalte Luftströmungen verwirbeln dabei so, dass sich örtlich dem mittleren lokalen Temperaturverlauf eine sich zeitlich schneller ändernde Temperaturkomponente überlagert. Durch Messen der Amplitude und/oder der Frequenz der Abweichungen von dem normalen, mittleren Verlauf der Temperatur oder Strömungsgeschwindigkeit kann daher zuverlässig auf eine nachhaltige Veränderung in der Umgebungsvariablen geschlossen werden, die bspw. durch eine Fensteröffnung ausgelöst ist. Insbesondere können die Messungen von Temperatur und Strömungsgeschwindigkeit kombiniert werden. Dann stehen nicht unmittelbar miteinander korrelierte Messwerte zur Verfügung, die aufgrund ihrer Redundanz eine besonders zuverlässige Erkennung einer Fensteröffnung ermöglichen.

Zur Bestimmung einer Veränderung der Temperatur wird erfindungsgemäß die Amplitude der Temperatur ermittelt, die Abweichung von der mittleren Temperatur bestimmt und die Frequenz der Abweichungen analysiert. Aufgrund der Durchmischung von kalter und warmer Luft fluktuiert während des Lüftungsvorgangs der aufgenommene Temperaturverlauf stärker als bei geschlossenem Fenster. Diese Fluktuationen werden durch Bestimmung von Amplitude und Frequenz zuverlässig ermittelt.

Vorzugsweise wird dazu ein schnell ansprechender Temperatursensor verwendet, der die Amplitude der Temperatur in kurzen zeitlichen Abständen misst.

Zur Bestimmung einer Veränderung der Strömungsgeschwindigkeit wird die Amplitude der Strömungsgeschwindigkeit ermittelt und die Abweichung von der mittleren Strömungsgeschwindigkeit bestimmt. Aus der Größe (Amplitude) der Abweichungen kann dann auf die Fensteröffnung geschlossen werden, da derartige Abweichungen in geschlossenen Räumen nicht auftreten. Typische Geschwindigkeiten der Aufwärtsströmung am Heizkörper betragen etwa 0,4 bis 0,8 m/s, wobei die strömende Grenzschicht relativ dünn ist. Die Geschwindigkeit hängt von der Übertemperatur und der Höhe des Heizkörpers ab. Eine Strömungsgeschwindigkeit von 0,8 m/s wird bspw. bei einem Heizkörper mit etwa 70° C Oberflächentemperatur und 1 m Höhe erreicht. Zusätzlich kann auch die Frequenz der Abweichungen in der Strömungsgeschwindigkeit analysiert werden, um die Turbulenzen in der Strömungsgeschwindigkeit sicher zu erfassen.

Erfindungsgemäß wird zur Messung der Strömungsgeschwindigkeit ein Anemometer, bspw. ein Hitzedraht- oder Hitzekugelanemometer verwendet. Gemäß einer anderen, besonders bevorzugten Ausführungsform wird jedoch ein Temperatursensor mit einem Strompuls aufgeheizt, wobei er sich durch die vorbeiströmende Luft abkühlt und der zeitliche Verlauf des elektrischen Sensorwiderstandes bestimmt wird. Dieser Sensor zeichnet sich im Vergleich zu den vorgenannten Anemometern durch einen niedrigen Stromverbrauch und einen einfachen technischen Aufbau aus. Daher eignet sich dieser Sensor insbesondere für batteriebetriebene Systeme. Aufgrund der geringen Masse und der großen Oberfläche des Sensors spricht dieser auch hinreichend schnell auf die Temperaturänderung durch die vorbeiströmende Luft an.

Eine einfache Möglichkeit zur Analyse der Amplituden- und Frequenzabweichungen bietet eine Fourieranalyse.

Vorteilhafterweise werden die ermittelten Abweichungen in Form von statistischen Kenndaten, wie Mittelwert, Standardabweichung oder dgl. festgehalten, um sie mit den ermittelten Kenndaten der nachfolgenden Abweichungen vergleichen zu können.

Zusätzlich kann der Gradient des mittleren Verlaufs der Temperatur und/oder der Strömungsgeschwindigkeit bestimmt werden, um eine zusätzliche Information über Veränderungen dieser Umgebungsvariablen zu erhalten. Insbesondere kann auch eine Kombination von Temperatur- und Strömungsgeschwindigkeitsmessung durchgeführt werden, bei denen jeweils die Abweichungen in Amplitude und/oder Frequenz bestimmt werden, so dass ein besonders zuverlässiger Rückschluss auf die Ursache der Veränderungen in den Umgebungsvariablen möglich ist.

Ferner bezieht sich die Erfindung auf eine Vorrichtung zur Erkennung einer Fensterlüftung durch Erkennen von Veränderungen in Temperatur oder Strömungsgeschwindigkeit der Umgebungsluft mit mindestens einem Sensor zum Messen der Amplitude der Temperatur und/oder Strömungsgeschwindigkeit mit einer vorgebbaren Frequenz. Dabei wird durch eine Sensorsignal-Verarbeitungseinrichtung die Amplitude und/oder Frequenz der Abweichungen vom mittleren Verlauf der Temperatur und/oder Strömungsgeschwindigkeit analysiert.

Als Sensor kann ein Anemometer, wie ein Hitzedraht- oder Hitzekugelanemometer, ein stromgepulster Temperatursensor mit temperaturabhängigem Widerstand oder ein Fluktuationssensor, insbesondere ein schnell ansprechender Temperatursensor, verwendet werden. Insbesondere die beiden letztgenannten Sensoren haben einen einfachen technischen Aufbau, so dass sie kostengünstig in den Vorrichtungen verwendet werden können. Die Messvorrichtung kann auch eine Kombination mehrerer dieser Sensoren aufweisen.

Der Sensor kann zur Bearbeitung seines Ausgangssignals einen Tiefpassfilter aufweisen.

Vorzugsweise ist die Sensor-Verarbeitungseinrichtung eine programmgesteuerte Computereinrichtung, in der Programme zur Auswertung der Sensorsignale gespeichert sind. Diese können bspw. mit Hilfe eines Fuzzy-Sets mit aufeinanderfolgenden Wenn-Dann-Abfragen realisiert werden.

Die Sensorsignal-Verarbeitungseinrichtung kann erfindungsgemäß auch eine Integrationseinrichtung zur Bestimmung des mittleren Temperaturverlaufs und/oder der mittleren Strömungsgeschwindigkeit aufweisen, die die Temperatur und/oder die Strömungsgeschwindigkeit über einen längeren Zeitraum aufintegriert und bezogen auf die Integrationszeit einen Mittelwert bestimmt.

Außerdem weist die Sensorsignal-Verarbeitungseinrichtung vorzugsweise eine Speichereinrichtung zur Speicherung der Messwerte und Kenndaten auf, so dass diese für spätere Vergleiche zur Verfügung stehen.

Gemäß einer speziellen Ausführungsform ist bei der Vorrichtung auch eine mit der Sensorsignal-Verarbeitungseinrichtung über Draht oder Funk verbundene Regel- und Steuereinrichtung vorgesehen, insbesondere zum Öffnen und Schließen von motorbetriebenen Heizkörperventilen. Auf diese Weise kann die durch die Vorrichtung erkannte Fensterlüftung sofort in eine Heizungsregelung an einem motorbetriebenen Thermostatventil umgesetzt werden.

Die Erfindung wird nachfolgend anhand von Ausführungsbeispielen und der Zeichnung näher beschrieben.

Es zeigen:
- Fig. 1: schematisch den Aufbau der erfindungsgemäßen Vorrichtung zum Erkennen von Veränderungen in den Umgebungsvariablen und
- Fig. 2: den Temperaturverlauf bei geschlossenem und geöffnetem Fenster

Die Vorrichtung 1 weist einen Sensor 2 auf, der in der Nähe einer als Heizkörper 3 ausgebildeten Heizfläche und eines Fensters 4 angeordnet ist. Der Sensor 2 ist mit einer Sensorsignal-Verarbeitungseinrichtung 5 verbunden.

Beim Öffnen des Fensters 4 in einem beheizten Raum strömt kalte Außenluft in das Zimmer ein, die mit der durch freie Konvektion entstandenen Raumwalze verwirbelt. Dies geschieht hauptsächlich in der Nähe des Fensters 4 und des Heizkörpers 3, wo auch der Sensor 2 zur Erfassung von Veränderung der Umgebungsvariablen angeordnet ist. Bei dem Sensor 2 kann es sich bspw. um ein Anemometer handeln, mit dem die Strömungsgeschwindigkeit der vorbeiströmenden Luft erfasst wird. In diesem Fall ist der Sensor 2 vorzugsweise ein elektronischer Temperatursensor, der mit einem Strompuls aufgeheizt und durch die vorbeiströmende Luft abgekühlt wird. In der Sensorsignal-Verarbeitungseinrichtung 5 wird dann der zeitliche Verlauf des elektrischen Sensorwiderstandes ausgewertet.

Alternativ oder zusätzlich kann der Sensor 2 auch ein intelligenter Fluktuationssensor sein, der aus einem schnell ansprechenden elektronischen Temperatursensor besteht. So kann die Amplitude der Temperatur in schneller zeitlicher Abfolge hintereinander gemessen werden, so dass in der Sensorsignal-Verarbeitungseinrichtung 5 neben der Amplitude auch die Frequenz der Abweichungen vom mittleren Temperaturverlauf analysiert werden kann. Die Analyse geschieht vorzugsweise in einem Rechenwerk 6 der als Computereinrichtung ausgebildeten Sensorsignal-Verarbeltungseinrichtung 5. Dabei kann bspw. auf bekannte Fourier-Analyse-Verfahren und -programme zurückgegriffen werden. Zusätzlich weist die Sensorsignal-Verarbeitungseinrichtung 5 eine Integrationseinrichtung 7 und eine Speichereinrichtung 8 auf. In der Integrationseinrichtung 7 können aufeinanderfolgend gemessene Sensorwerte gemittelt werden, um auch den mittleren Temperaturverlauf zu erhalten. Dazu kann der Sensor 2 an seinem Sensorausgang einen nicht dargestellten Tiefpassfilter aufweisen, der den Signalverlauf glättet.

Die Speichereinrichtung 8 ermöglicht das Abspeichern von mit dem Rechenwerk 6 ermittelten statistischen Kenndaten, wie Mittelwerte und Standardabweichung der ermittelten Abweichungen vom mittleren Temperaturverlauf, so dass in der Sensorsignal-Verarbeitungseinrichtung 5 ein Vergleich der Sensorsignale über einen längeren Zeitraum möglich ist.

Wenn von der Sensorsignal-Verarbeitungseinrichtung 5 eine Fensterlüftung erkannt wurde, kann das Rechenwerk 6 ein Signal an eine Regel- und Steuereinrichtung 9 weiterleiten, die an dem Thermostatventil des Heizkörpers 3 angeordnet ist und einen nicht dargestellten Motor zum Betätigen des Thermostatventils aufweist. So kann das Heizkörperventil bei entdeckter Fensteröffnung geschlossen werden, um eine unnötige Wärmeabgabe zu vermeiden. Wenn das Schließen des Fensters durch eine entsprechende Änderung von Temperatur und/oder Strömungsgeschwindigkeit, die mit dem Sensor 2 nachgewiesen wurde, festgestellt wird, kann die Regel- und Steuereinrichtung 9 das Ventil am Heizkörper 3 wieder öffnen.

Obwohl in der schematischen Darstellung der Sensor 2, die Sensorsignal-Verarbeitungseinrichtung 5 und die Regel- und Steuereinrichtung 9 als getrennte Elemente dargestellt sind, können diese bspw. in ein Gehäuse integriert und direkt am Ventil des Heizkörpers 3 angebracht sein.

Es ist ebenso denkbar, den Sensor 2 an einer für die Veränderung von Temperatur und/oder Strömungsgeschwindigkeit besonders sensitiven Stelle im Raum anzuordnen und die Verbindung zu einer separaten Sensorsignal-Verarbeitungseinrichtung über Draht oder Funk herzustellen. Ebenso kann die Verbindung zwischen der Sensorsignal-Verarbeitungseinrichtung 5 und der Regel- und Steuereinrichtung 9 als Draht- oder Funkverbindung ausgebildet sein.

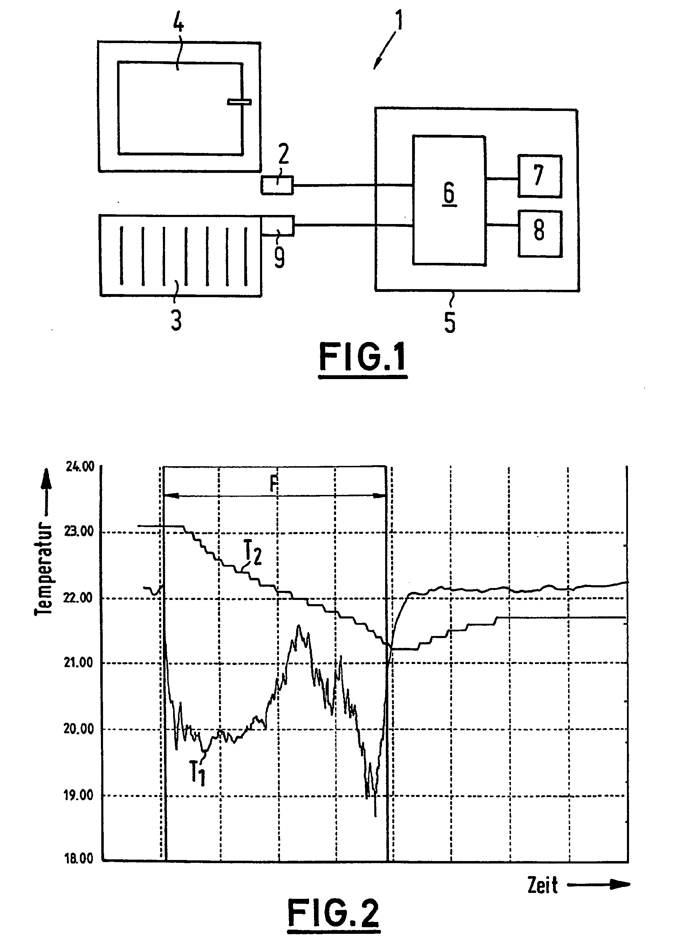

In Fig. 2 ist der Temperaturverlauf bei geöffnetem und geschlossenem Fenster in Abhängigkeit von der Zeit dargestellt. Die Kurve T1 zeigt einen an dem Sensor 2 mit einer kurzen Abtastzeit von einigen Sekunden gemessenen Temperaturverlauf. Im Gegensatz zu dem Temperaturverlauf T2 im Inneren der Regel- und Steuereinrichtung 9, das gegen die Turbulenzen im Nahbereich des Heizkörpers 3 abgeschirmt ist, sind während der Fensteröffnung F im Temperaturverlauf T1 deutlich stärkere, hochfrequente Schwankungen zu erkennen. Nach dem Schließen des Fensters ist der Temperaturverlauf T1 dagegen im Wesentlichen konstant und unterliegt nur geringen Amplitudenänderungen. Wie Versuche gezeigt haben, beeinflussen Variationen in der Abtastzeit das Messergebnis für den Temperaturverlauf T1 nicht gravierend, solange die Abtastzeit im Verhältnis zur Fensteröffnung F kurz ist. Daher eignet sich der Temperaturverlauf T1 sehr gut zur Erkennung einer Fensteröffnung.

Durch die Analyse der Amplitude und/oder Frequenz der Abweichungen von Temperatur und/oder Strömungsgeschwindigkeit ist es also möglich, eine Fensterlüftung in beheizten Räumen zuverlässig und sicher nachzuweisen, um ggf. elektronische Regeleinrichtungen zum Schließen und Öffnen der Heizkörperventile zu betätigen.

### Bezugszeichenliste:

- 1: Vorrichtung
- 2: Sensor
- 3: Heizkörper
- 4: Fenster
- 5: Sensorsignal-Verarbeitungseinrichtung
- 6: Rechenwerk
- 7: Integrationseinrichtung
- 8: Speichereinrichtung
- 9: Regel- und Steuereinrichtung
- T1: Temperaturverlauf
- T2: Temperaturverlauf
- F: Fensteröffnung

## Patentansprüche

1. Verfahren zur Erkennung einer Fensterlüftung in beheizten Räumen durch Erkennung von Veränderungen in der Temperatur und/oder Strömungsgeschwindigkeit, wie Temperatur oder Strömungsgeschwindigkeit der Umgebungsluft, **dadurch gekennzeichnet, dass** die Temperatur und/oder Strömungsgeschwindigkeit über der Zeit gemessen und hieraus ein mittlerer Verlauf der Temperatur und/oder Strömungsgeschwindigkeit ermittelt wird und dass Amplitude und/oder Frequenz der Abweichungen der einzelnen Messwerte von dem mittleren Verlauf der Temperatur und/oder Strömungsgeschwindigkeit analysiert werden.

2. Verfahren nach Anspruch 1, **dadurch gekennzeichnet, dass** ein schnell ansprechender Temperatursensor zur Messung der Amplitude der Temperatur in kurzen zeitlichen Abständen verwendet wird.

3. Verfahren nach Anspruch 1, **dadurch gekennzeichnet, dass** zur Messung der Strömungsgeschwindigkeit ein Anemometer, vorzugsweise ein Hitzedraht- oder Hitzekugelanemometer, verwendet wird.

4. Verfahren nach Anspruch 1, **dadurch gekennzeichnet, dass** ein Temperatursensor mit einem Strompuls aufgeheizt wird, wobei er sich durch die vorbeiströmende Luft abkühlt, und dass der zeitliche Verlauf des elektrischen Sensorwiderstandes bestimmt wird.

5. Verfahren nach einem der vorhergehenden Ansprüche, **dadurch gekennzeichnet, dass** zur Analyse der Amplitude und Frequenz der Abweichungen eine Fourier-Analyse der Messdaten durchgeführt wird.

6. Verfahren nach einem der vorhergehenden Ansprüche, **dadurch gekennzeichnet, dass** die ermittelten Abweichungen in Form statistischer Kenndaten, wie Mittelwert, Standardabweichung oder dgl., festgehalten werden.

7. Verfahren nach einem der vorhergehenden Ansprüche, **dadurch gekennzeichnet, dass** der Gradient des mittleren Verlaufs der Temperatur und/oder Strömungsgeschwindigkeit bestimmt wird.

8. Vorrichtung zur Erkennung einer Fensterlüftung in beheizten Räumen durch Erkennen von Veränderungen in der Temperatur und/oder Strömungsgeschwindigkeit der Umgebungsluft mit mindestens einem Sensor (2) zum Messen der Amplitude der Temperatur und/oder Strömungsgeschwindigkeit mit einer vorgebbaren Frequenz und mit einer Sensorsignal-Verarbeitungseinrichtung (5) zur Analyse der Amplitude und/oder Frequenz der Abweichungen vom mittleren Verlauf der Temperatur und/oder Strömungsgeschwindigkeit.

9. Vorrichtung nach Anspruch 8, **dadurch gekennzeichnet, dass** der Sensor (2) ein Anemometer, wie ein Hitzedraht- oder Hitzekugelanemometer, ist.

10. Vorrichtung nach Anspruch 8 oder 9, **dadurch gekennzeichnet, dass** der Sensor (2) ein stromgepulster Temperatursensor mit temperaturabhängigem Widerstand ist.

11. Vorrichtung nach einem der Ansprüche 8 bis 10, **dadurch gekennzeichnet, dass** der Sensor (2) ein Fluktuationssensor, insbesondere ein schnell ansprechender Temperatursensor, ist.

12. Vorrichtung nach einem der Ansprüche 8 bis 11, **dadurch gekennzeichnet, dass** an dem Sensor (2) ein Tiefpassfilter angeordnet ist.

13. Vorrichtung nach einem der Ansprüche 8 bis 12, **dadurch gekennzeichnet, dass** die Sensorsignal-Verarbeitungseinrichtung (5) eine programmgesteuerte Computereinrichtung ist.

14. Vorrichtung nach einem der Ansprüche 8 bis 13, **dadurch gekennzeichnet, dass** die Sensorsignal-Verarbeitungseinrichtung (5) eine Integrationseinrichtung (7) zur Bestimmung des mittleren Temperaturverlaufs und/oder mittleren Strömungsgeschwindigkeit aufweist.

15. Vorrichtung nach einem der Ansprüche 8 bis 14, **dadurch gekennzeichnet, dass** die Sensorsignal-Verarbeitungseinrichtung (5) eine Speichereinrichtung (8) zur Speicherung der Messwerte und Kenndaten aufweist.

16. Vorrichtung nach einem der Ansprüche 8 bis 15, **gekennzeichnet durch** eine mit der Sensorsignal-Verarbeitungseinrichtung (5) über Draht und/oder Funk verbundene Regel- und Steuereinrichtung (9) zum Öffnen und Schließen von motorbetriebenen Heizkörperventilen.

## Claims

1. A method for detecting window ventilation in heated rooms by detecting changes in the temperature and the flow velocity, such as the temperature or flow velocity of the ambient air,
**characterised in that** the temperature and/or flow velocity is measured over time and a mean course of the temperature and/or flow velocity is determined therefrom
**and in that** the amplitude and/or frequency of the deviations in the individual measured values from the mean course of the temperature and/or flow velocity are analysed.

2. A method according to Claim 1,
**characterised in that** a fast-response temperature sensor is used to measure the amplitude of the temperature in brief time intervals.

3. A method according to Claim 1,
**characterised in that** an anemometer, preferably a hot wire or hot ball anemometer, is used to measure the flow velocity.

4. A method according to Claim 1,
**characterised in that** a temperature sensor is heated with a current pulse, with it being cooled by the air flowing past,
**and in that** the temporal course of the electrical sensor resistance is determined.

5. A method according to one of the preceding Claims,
**characterised in that** a Fourier analysis of the measurement data is performed to analyse the amplitude and frequency of the deviations.

6. A method according to one of the preceding Claims,
**characterised in that** the determined deviations are recorded in the form of statistical characteristic data, such average, standard deviation or the like.

7. A method according to one of the preceding Claims,
**characterised in that** the gradient of the mean course of the temperature and/or flow velocity is determined.

8. A device for detecting window ventilation in heated rooms by detecting changes in the temperature and/or flow velocity of the ambient air, having at least one sensor (2) for measuring the amplitude of the temperature and/or flow velocity with a preset frequency and having a sensor signal processing unit (5) for analysing the amplitude and/or frequency of deviations from the mean course of the temperature and/or flow velocity.

9. A device according to Claim 8,
**characterised in that** the sensor is an anemometer, such as a hot wire or hot ball anemometer.

10. A device according to Claim 8 or 9,
**characterised in that** the sensor (2) is a current-pulsed temperature sensor with temperature-dependent resistance.

11. A device according to one of Claims 8 to 10,
**characterised in that** the senor (2) is a fluctuation sensor, in particular a fast-response temperature sensor.

12. A device according to one of Claims 8 to 11,
**characterised in that** a low-pass filter is provided on the sensor (2).

13. A device according to one of Claims 8 to 12,
**characterised in that** the sensor signal processing unit (5) is a programme-controlled computer device.

14. A device according to one of Claims 8 to 13,
**characterised in that** the sensor signal processing unit (5) is an integration device (7) for determining the mean temperature profile and/or mean flow velocity.

15. A device according to one of Claims 8 to 14,
**characterised in that** the sensor signal processing unit (5) comprises a storage device (8) for storing the measured values and characteristic data.

16. A device according to one of Claims 8 to 15,
**characterised by** a control unit (9) connected in wire-bound or wireless manner to the sensor signal processing device (5) for opening and closing motor-driven radiator valves.

## Revendications

1. Procédé pour reconnaître une aération par fenêtre dans des pièces chauffées en reconnaissant des variations de température et/ou de vitesse d'écoulement, telles que température ou vitesse d'écoulement de l'air ambiant, **caractérisé en ce que** la température et/ou la vitesse d'écoulement sont mesurées dans le temps et une courbe moyenne de température et/ou de vitesse d'écoulement en est déduite, et **en ce que** l'amplitude et/ou la fréquence des divergences des mesures individuelles par rapport à la courbe moyenne de la température et/ou de la vitesse d'écoulement est analysée.

2. Procédé selon la revendication 1, **caractérisé en ce qu'**un capteur de température à sensibilité rapide est utilisé pour la mesure à intervalles rapides de l'amplitude de la température.

3. Procédé selon la revendication 1, **caractérisé en ce qu'**un anémomètre est utilisé pour la mesure de la vitesse d'écoulement, de préférence un anémomètre à fil chaud ou à boule chaude.

4. Procédé selon la revendication 1, **caractérisé en ce qu'**un capteur de température est chauffé avec une impulsion de courant, lequel étant refroidi par l'air circulant au voisinage, et **en ce que** la courbe dans le temps de la résistance électrique du capteur est déterminée.

5. Procédé selon l'une des revendications précédentes, **caractérisé en ce qu'**une analyse de Fourier des mesures est réalisée pour analyser l'amplitude et la fréquence des divergences.

6. Procédé selon l'une des revendications précédentes, **caractérisé en ce que** les divergences constatées sont enregistrées sous la forme de données caractéristiques statistiques telles que moyenne, écart type et autres.

7. Procédé selon l'une des revendications précédentes, **caractérisé en ce que** le gradient de la courbe moyenne de la température et/ou de la vitesse d'écoulement est déterminé.

8. Dispositif pour reconnaître une aération par fenêtre dans des pièces chauffées en reconnaissant des variations de température et/ou de vitesse d'écoulement de l'air ambiant avec au moins un capteur (2) pour mesure l'amplitude de la température et/ou la vitesse d'écoulement avec une fréquence pouvant être prédéterminée et avec un dispositif de traitement du signal du capteur (5) pour analyser l'amplitude et/ou la fréquence des divergences par rapport à la courbe moyenne de la température et/ou de la vitesse d'écoulement.

9. Dispositif selon la revendication 8, **caractérisé en ce que** le capteur (2) est un anémomètre, tel qu'un anémomètre à fil chaud ou à boule chaude.

10. Dispositif selon la revendication 8 ou 9, **caractérisé en ce que** le capteur (2) est un capteur de température à impulsion de courant dont la résistance dépend de la température.

11. Dispositif selon l'une des revendications 8 à 10, **caractérisé en ce que** le capteur (2) est un capteur de fluctuation, notamment un capteur de température à sensibilité rapide.

12. Dispositif selon l'une des revendications 8 à 11, **caractérisé en ce qu'**un filtre passe-bas est disposé sur le capteur (2).

13. Dispositif selon l'une des revendications 8 à 12, **caractérisé en ce que** le dispositif de traitement du signal du capteur (5) est un dispositif d'ordinateur à commande par programme.

14. Dispositif selon l'une des revendications 8 à 13, **caractérisé en ce que** le dispositif de traitement du signal du capteur (5) comprend un dispositif d'intégration (7) pour déterminer la courbe moyenne de température et/ou la vitesse d'écoulement moyenne.

15. Dispositif selon l'une des revendications 8 à 14, **caractérisé en ce que** le dispositif de traitement du signal du capteur (5) comprend un dispositif de mémoire (8) pour mémoriser les valeurs de mesure et les données caractéristiques.

16. Dispositif selon l'une des revendications 8 à 15, **caractérisé par** un dispositif de réglage et de commande (9) relié par câble et/ou par radio au dispositif de traitement du signal du capteur (5) pour ouvrir et fermer des robinets de radiateur actionnés par moteur.
